# EUROPÄISCHE PATENTSCHRIFT

(11) **EP 2 859 333 B1**
(45) Veröffentlichungstag und Bekanntmachung des Hinweises auf die Patenterteilung: **27.04.2016**
(21) Anmeldenummer: 13739343.5
(22) Anmeldetag: 05.06.2013
(51) Int. Cl.: G01N 21/77

(54) **OPTO-CHEMISCHER SENSOR**
OPTO-CHEMICAL SENSOR
CAPTEUR OPTO-CHIMIQUE

(30) Priorität: 06.06.2012 AT 6502012
(43) Veröffentlichungstag der Anmeldung: 15.04.2015
(73) Patentinhaber: Joanneum Research Forschungsgesellschaft mbH, 8010 Graz (AT)
(72) Erfinder: TSCHERNER, Martin, A-8010 Graz (AT); RIBITSCH, Volker, A-8010 Graz (AT)
(74) Vertreter: Olgemöller, Luitgard Maria
(86) Internationale Anmeldenummer: PCT/AT2013/000096
(87) Internationale Veröffentlichungsnummer: WO 2013/181679

(56) Entgegenhaltungen:
- EP-A2- 0 109 959
- WO-A1-2005/100957
- DE-A1-102006 025 470

## Beschreibung

Die vorliegende Erfindung bezieht sich auf einen opto-chemischen Sensor, umfassend eine auf einem Träger aufgebrachte Polymermatrix, welche mit einem Lumineszenzfarbstoff dotiert ist, dessen Emissionsvermögen nach einer Anregung mit elektromagnetischer Strahlung durch nachzuweisende Substanzen, wie gasförmiges oder gelöstes O₂, SO₂ H₂O₂, CO₂, Stickoxide, halogenierte Kohlenwasserstoffe veränderbar ist und welche eine Sensorschicht ausbildet, welche mit einer für die zu analysierende Substanz durchlässigen, optischen Schutz-, Stützund/oder Isolierschicht abgedeckt ist.

Sensoren zum Messen der Konzentration von bestimmten Substanzen, wie Gasen in Lösungen bzw. Feststoffen arbeiten entweder elektrochemisch, wobei sie in diesem Falle den Nachteil aufweisen, dass sie für einen quantitativen Nachweis des zu bestimmenden Gases einen Teil der zu bestimmenden Substanz verbrauchen, wodurch das Messergebnis verfälscht wird oder aber es wurden in letzter Zeit opto-chemische Sensoren entwickelt, welche sich dadurch auszeichnen, dass sie die Zusammensetzung des Analyten über die Zeit nicht verändern, sondern dass sie den quantitativen Nachweis der Konzentration der zu bestimmenden Substanz bzw. des zu bestimmenden Gases nur durch eine Lumineszenzlöschung der in dem Sensor enthaltenen lumineszierenden Substanz anzeigen. Hierbei werden charakteristische Parameter, wie beispielsweise die Lumineszenzintensität, die Phasenverschiebung des Lumineszenzsignals oder auch die Abklingzeit der Lumineszenz überprüft und durch Vergleich des Lumineszenzsignals mit einer Kalibrierfunktion gelingt ein quantitativer Nachweis der zu messenden Substanz.

Frühe opto-chemische Sensoren, wie sie beispielsweise in der EP-A 0 550 424 oder in der EP-A 0 601 816 beschrieben sind, verwenden spezielle Polymere, in denen Gase, wie beispielsweise Sauerstoff und CO, gut lösbar sind, um über die Löslichkeit der Gase in dem Polymer zu einem quantitativen Nachweis der Gase zu gelangen. Nachteilig an diesen bekannten Sensoren ist, dass sie nicht mehrfach verwendbar sind und dass sie aufgrund der in diesen Sensoren eingesetzten Polymere insbesondere bei Anwendung von erhöhten Temperaturen nicht sterilisierbar sind und somit schlecht bzw. gar nicht in biologischem Material eingesetzt werden können.

Aus der DE 10 2006 025 470 ist ein Fluoreszenzsensor zur Detektion von Gaszusammensetzungen bekannt geworden, bei welchem eine auf einem Träger aufgebrachte Schicht enthaltend einen Fluoreszenzfarbstoff mit einer gaspermeablen Diffusionsschicht abgedeckt ist.

Der EP 0 109 959 A2 ist ein Sensorelement zur Bestimmung des Sauerstoffgehalts einer Probe zu entnehmen, bei welchem ein aus einem ausgehärteten Silikonpolymer gebildeter Träger die Indikatorsubstanz in solubilisierter Form gebunden aufweist, und welcher Träger an seiner einer Probe zugewandten Seite mit einer weiteren Polymerschicht, welche eine geringere Lichtdurchlässigkeit aufweist, abgedeckt ist.

Der WO 2005/100957 ist ein Lumineszenzsensor zur Bestimmung und/oder Überwachung eines in einem fluiden Prozessmedium enthaltenen Analyten zu entnehmen, bei welchem in eine poröse Trägerstruktur eine lumineszierende mit dem Analyten bzw. dem gasförmigen Prozessmedium in Kontakt gelangende Substanz eingebettet ist, welche mit wenigstens einer Schutzschicht abgedeckt ist.

Aus der EP-B 1 114 309 ist bereits ein mehrfach verwendbarer, opto-chemischer Sensor bekannt geworden, bei welchem ein in einer Polymermatrix enthaltener Lumineszenzfarbstoff zu elektromagnetischer Strahlung angeregt wird, dessen Emissionsvermögen sich nach der Anregung verändert, wodurch eine quantitative Messung ermöglicht ist. Die in diesem opto- chemischen Sensor eingesetzten Polymere bzw. die Polymermatrix ist hierbei aus wenigstens einem Polymer ohne Zusatz von Weichmachern gebildet, wobei das gewählte Polymer eine Glasübergangstemperatur von über 140 °C aufweist, weshalb der Sensor sowohl sterilisierbar als auch an biologischem Material einsetzbar und mehrfach verwendbar ist, Nachteilig an diesem bekannten, opto-chemischen Sensor ist, dass eine relativ große Menge an Lumineszenzfarbstoff in dem Sensor eingesetzt werden muss, um auch bei mehrfacher Verwendung des Sensors reproduzierbare Messergebnisse zu erhalten und dass der Sensor gegenüber mechanischen Einflüssen extrem empfindlich ist und somit meist bereits nach wenigen Messungen derart beschädigt ist, dass er für einen weiteren Einsatz nicht mehr geeignet erscheint.

Die vorliegende Erfindung zielt nun darauf ab, einen opto-chemischen Sensor zur Verfügung zu stellen, bei welchem die Neigung zur Aggregatbildung oder Migration des Lumineszenzfarbestoffs stark herabgesetzt ist und mit welchem auch bei einer mehrfachen Wiederverwendung stabil reproduzierbare Ergebnisse erhalten werden können. Weiterhin zielt die Erfindung darauf ab, durch einen speziellen Aufbau des Sensors eine Abschwächung des Messsignals auch nach einer Vielzahl von Messungen hintanzuhalten.

Zur Lösung dieser Aufgabe ist der opto-chemische Sensor gemäß der vorliegenden Erfindung dadurch gekennzeichnet, dass die Sensorschicht aus einer wenigstens ein inselförmiges Sensorelement aufweisenden Schicht gebildet ist, welches wenigstens eine Sensorelement von einer, nicht dotierten Polymermatrix aus demselben Polymermaterial wie das wenigstens eine Sensorelement überdeckt ist und dass eine weitere Schicht aus demselben Material wie die nicht dotierte Polymermatrix zwischen dem Träger und der das wenigstens eine Sensorelement aufweisenden Schicht vorgesehen ist. Dadurch, dass die Sensorschicht aus einer Schicht gebildet ist, welche von einer der Polymermatrix entsprechenden Deckschicht überdeckt ist, gelingt es, das Sensorelement soweit als möglich in der Sensorschicht einzubetten, so dass das Ausbluten der Lumineszenzfarbstoffe auch bei einer Mehrfachverwendung und bei einer Sterilisierung des Sensors soweit als möglich verhindert ist.

Um das wenigstens eine empfindliche Sensorelement soweit als möglich allseitig zu umgeben und somit reproduzierbare Messungen zu gewährleisten, ist der erfindungsgemäße opto-chemische Sensor so ausgebildet, dass eine weitere Schicht entsprechend der nicht dotierten Polymermatrix zwischen dem Träger und der das Sensorelement aufweisenden Schicht vorgesehen ist. Durch das allseitige Einbetten der empfindlichen Sensorschicht bzw. der empfindlichen Lumineszenzfarbstoffe in eine Polymermatrix bzw. Polymerschicht wird einerseits sichergestellt, dass durch die gezielte Wahl des für die zu analysierende Substanz durchlässigen Polymers, welches die Polymermatrix ausbildet, eine sichere und zuverlässige Messung der zu analysierenden Substanzen ermöglicht wird und andererseits wird gleichzeitig gewährleistet, dass ein Ausbluten bzw. Auswaschen bzw. Inaktivieren der empfindlichen Lumineszenzfarbstoffe auch bei einer Mehrzahl von Messungen bzw. wiederholten Messungen mit Sicherheit hintangehalten wird. Schließlich wird eine Migration der Lumineszenzfarbstoffe in umgebende Schichten verhindert. Ein derartiges Verhindern der Migration in umgebende Schichten ist insbesondere deshalb von Bedeutung, da der Lumineszenzfarbstoff in diesen in einer physikalisch und chemisch anderen Umgebung vorliegen würde und sich bezüglich der Analytenempfindlichkeit anders verhalten würde und es somit zu einer Verfälschung der Messung, beispielsweise durch Bildung einer "artfremden" Population an Farbstoffmolekülen, führen würde.

Weiterhin wurde festgestellt, dass es an den Grenzfläche zwischen dem die Polymermatrix ausbildenden Matrixpolymer und weiteren, chemisch vom Matrixpolymer verschiedenen Materialien bevorzugt zu einer Aggregatbildung der Farbstoffmoleküle und somit zur Ausbildung einer "artfremden" Population an Farbstoffmolekülen bzw. zu einem Selbstlöschen, d.h. keiner Empfindlichkeit gegenüber den zu messenden Analyten kommen könnte. Darüber hinaus könnte im Falle einer derartigen Aggregatbildung das Verhalten des Sensors mit der bekannten Kennlinienfunktion des Stern-Volmer-Falselight-Modells nur unzureichend beschrieben und eine numerische Kurvenanpassung von Kalibrationspunkten nur mit unnötig großen Restabweichun- gen erreicht werden. Durch die erfindungsgemäße Ausbildung gelingt es demgegenüber zu vermeiden, dass Farbstoffmoleküle in eine "störende" Population überwechseln und somit gelingt es weiterhin die Kennlinie mit der Stern-Volmer-Falselight-Gleichung exakt zu beschreiben.

Gemäß einer Weiterbildung der Erfindung ist die Sensorschicht aus einer eine Mehrzahl von voneinander getrennten Sensorelementen aufweisenden Schicht gebildet, welche Sensorelemente von einer chemisch der Polymermatrix der Sensorschicht entsprechenden, nicht dotierten Polymermatrix überdeckt sind. Dadurch, dass die Sensorschicht aus einer Schicht gebildet ist, in welcher eine Mehrzahl von voneinander getrennten Sensorelementen enthalten ist, gelingt es, die Sensorelemente soweit als möglich in der Sensorschicht einzubetten, so dass ein Auswaschen der Lumineszenzfarbstoffe auch bei einer Mehrfachverwendung und bei einer Sterilisierung des Sensors soweit als möglich hintangehalten ist und gleichzeitig die Menge an eingesetztem Lumineszenzfarbstoff soweit als möglich minimiert werden kann. Indem weiterhin die Sensorelemente von einer chemisch der Polymermatrix der Sensorelemente entsprechenden, nicht dotierten Polymermatrix überdeckt sind, gelingt es zusätzlich, eine Schutzschicht über den empfindlichen Sensorelementen auszubilden, so dass aufgrund des Schutzes der Messschicht vor Beschädigung oder Zerstörung die Zahl der Verwendungszyklen des Sensorelements weiter erhöht werden kann und gleichzeitig auch eine Abschwächung der Messsignale aufgrund von ausgewaschenem oder chemisch verändertem Lumineszenzfarbstoff sicher hintangehalten ist.

Weiterhin gelingt es durch die Trennung der Sensorelemente voneinander zwischen den einzelnen Sensorelementen Bereiche auszubilden in welchen ein direkter Kontakt einer Deckschicht mit dem Träger erreicht ist, durch welchen direkten Kontakt insbesondere die mechanische Stabilität des Sensors deutlich gegenüber herkömmlichen Produkten erhöht ist, insbesondere dann, wenn die Deckschicht aus einem nicht der Polymermatrix entsprechenden Material gebildet ist.

Um die Zyklenzahl der Wiederverwertung des opto-chemischen Sensors gemäß der Erfindung noch weiter zu erhöhen, ist der erfindungsgemäße Sensor dahingehend weitergebildet, dass die zwei Schichten aus nicht dotierter Polymermatrix in dem das wenigstens eine Sensorelement umgebenden Bereich miteinander chemisch und/oder physikalisch verbunden sind. Durch die chemische und/oder physikalische Verbindung der zwei Schichten aus nicht dotierter Polymermatrix werden die Sensorelemente bzw. das Sensorelement vollständig und insbesondere dicht von der nicht dotierten Polymermatrix umgeben, so dass eine Aktivitätsabnahme aufgrund von unbeabsichtigtem Auswaschen bzw. Ausbluten des Lumineszenzfarbstoffs mit Sicherheit hintangestellt ist und somit die Zyklus- zahl des Sensors weiter erhöht werden kann.

Weiterhin ist, wie dies einer möglichen Weiterbildung der Erfindung entspricht, der opto-chemische Sensor so ausgebildet, dass die Mehrzahl von Sensorelementen als Feld von untereinander einen gleichmäßigen Abstand aufweisenden Sensorelementen, insbesondere punktförmigen Sensorelementen ausgebildet ist. Indem der opto-chemische Sensor durch Anordnung einer Mehrzahl von Sensorelementen als Feld von untereinander in einem gleichmäßigen Abstand aufweisenden Sensorelementen gebildet ist, kann einerseits die Menge an eingesetztem Lumineszenzfarbstoff minimiert werden und andererseits gleichzeitig eine große Sensor- bzw. Messoberfläche zur Verfügung gestellt werden, mit welcher quantitative und reproduzierbare Messergebnisse mit Sicherheit erzielt werden können.

Gemäß einer Weiterbildung der Erfindung ist der opto-chemische Sensor dadurch gekennzeichnet, dass das Feld von Sensorelementen aus wenigstens zwei voneinander in Bezug auf die Menge oder Art der Dotierung mit Lumineszenzfarbstoff verschiedenen Gruppen von Sensorelementen gebildet ist. Indem das Feld von Sensorelementen aus wenigstens zwei voneinander verschiedenen Gruppen von Sensorelementen gebildet ist, wobei die Gruppen untereinander durch die Art der Dotierung mit Lumineszenzfarbstoff oder die Art des Matrixpolymers verschieden sind, gelingt es, gleichzeitig eine Mehrzahl von nachzuweisenden Substanzen, wie gasförmigen oder gelösten Sauerstoff, SO₂, H₂O₂, CO₂, Stickoxide, halogenierte Kohlenwasserstoffe, und dgl. mit ein und demselben Sensor quantitativ nachzuweisen. Durch Unterschiede in der Art des Matrixpolymers oder auch der Art des Lumineszenzfarbstoffs werden gleichzeitig für ein und dieselbe nachzuweisende Substanz unterschiedlich intensive Signale erhalten, so dass beispielsweise mit ein und demselben Sensor eine große Bandbreite von Konzentrationen der gelösten Substanzen quantitativ ermittelt werden kann.

Indem, wie dies an sich bekannt ist, der opto-chemische Sensor durch eine Stütz-, Schutz- und/oder Isolierschicht, die aus grob- oder feinporigen Polytetrafluorethylenmembranen oder Nylonmembranen, insbesondere mit einer Porengröße zwischen 0,1 µm und 160 µm, vorzugsweise 01 µm und 30 µm, Kohlefasergeweben, speziellen Textil-Fasergeweben, semipermeablen Membranen aus löslichen Polymeren, insbesondere löslichen, perfluorierten Polymeren, oder einer Kombination daraus gewählt ist, abgedeckt ist, gelingt es weiterhin, einen mechanischen und chemischen Schutz der Sensoroberfläche zur Verfügung zu stellen. Durch die Ausbildung als poröse oder semipermeable Schicht wird jedoch der Durchtritt der zu analysierenden Substanz zur Sensoroberfläche nicht behindert und eine schnelle Einstellung des Messwerts gewährleistet. Weiterhin gelingt es mit einer derartigen Isolier- bzw. Schutzschicht, den Sensor gegenüber Umwelteinflüssen oder Umgebungslicht abzuschirmen.

Für einen dichten Materialverbund und insbesondere um die Standzeit des opto-chemischen Sensors und somit die Zahl der Nutzungszyklen weiter zu erhöhen, ist der Sensor gemäß der Erfindung dahingehend weitergebildet, dass die Stütz-, Schutz- und/oder Isolierschicht wenigstens teilweise in die die Sensorelemente aufweisende, nicht dotierte Polymermatrix eingebettet ist, wodurch insbesondere eine Zerstörung der Polymermatrix hintangehalten ist.

Um insbesondere eine unbeabsichtigte Anregung durch Fremdlicht oder durch chemische Fremdsubstanzen des in den Sensorelementen enthaltenen Lumineszenzfarbstoffes mit Sicherheit hintanzuhalten, ist der erfindungsgemäße Sensor dahingehend weitergebildet, dass über der nicht dotierten Polymermatrix oder der optischen Stütz-, Schutz- und/oder Isolierschicht eine Deckschicht vorgesehen ist, welche gemäß einer bevorzugten Weiterbildung aus zwei Deckschichten ausgebildet ist und dass zwischen den Deckschichten die Stütz-, Schutz- und/oder Isolierschicht angeordnet ist. Durch die Pigmentierung der Deckschicht mit Russ gelingt es insbesondere während einer Messung bzw. während einer Mehrzahl von sukzessiven aufeinanderfolgenden Messungen die unbeabsichtigte Anregung mit Fremdlicht und somit eine Verfälschung des Messsignals hintanzuhalten. Besondere bevorzugte Eigenschaften und insbesondere sowohl eine mechanische Stütze, einen Schutz gegen chemische Angriffe und eine optische Isolierung können bevorzugt erzielt werden, wenn, wie dies einer Weiterbildung der Erfindung entspricht, die Deckschicht aus Silikonen, teilweise fluorierten Silikonen und Perfluorsilikonen, Beschichtungen aus löslichen Polymeren, insbesondere löslichen, perfluorierten Polymeren oder einer Kombination daraus gewählt ist. Durch die Ausbildung der Deckschicht aus zwei Schichten gelingt es, die oftmals eine schlechte Haftfähigkeit aufweisende Stütz-, Schutz- und/oder Isolierschicht in der Deckschicht sicher und vollständig einzubetten, wodurch eine unbeabsichtigte Ablösung der Isolierschicht oder auch eine Ablösung der Sensorschicht von dem Träger mit Sicherheit hintangehalten ist.

Indem, wie dies einer bevorzugten Weiterbildung der Erfindung entspricht, die äußere Deckschicht mit Russ pigmentiert ist und die innere Deckschicht mit TiO₂ pigmentiert ist, gelingt es einerseits, eine möglichst gute Rückstreuung des Anregungs- und Lumineszenzlichts zu erzielen und andererseits die unbeabsichtigte Anregung mit Fremdlicht sicher hintanzuhalten.

In einer besonders bevorzugten Weiterbildung der Erfindung ist das für die Ausbildung der Deckschichten verwendete Grundmaterial aus einem der Polymermatrix entsprechenden Polymer gewählt, welches für die Ausbildung der Deckschichten mit TiO₂ und/oder Russ pigmentiert sein kann. Dadurch, dass die Deckschichten aus einem der Polymermatrix entsprechenden Material ausgebildet sind, ist es möglich, eine chemisch und physikalisch besonders stabile Verbindung zwischen den Deckschichten und der Sensorschicht bzw. der nicht dotierten Polymermatrix auszubilden. Weiterhin weisen dadurch die Deckschicht und die Sensorschicht eine nahezu gleiches Wärmedehnungsverhalten und Quellverhalten in flüssigen Medien auf, wodurch Scherkräfte zwischen den Schichten, wie sie im Zuge von Temperaturwechselbelastungen oder bei Kontakt mit unterschiedlichen flüssigen Medien auftreten können, effektiv vermieden werden und eine Neigung zu mechanisch induzierter Delamination damit unterdrückt wird. Dadurch kann die Zahl von aufeinander folgenden Messzyklen und besonders bei wiederholt angewandten Sterilisationszyklen weiter erhöht werden.

Gemäß der Erfindung werden die Sensorschicht, die nicht-dotierte Polymermatrix und die Deckschichten nach einander aus einer Polymerlösung auf den Träger bzw. die bereits vorhandenen darunterliegenden Schichten mittels eines geeigneten Abscheideverfahrens wie z.B. Siebdruck aufgebracht. Dadurch, dass die Schichten aus einer Polymerlösung, aus welcher das Lösungsmittel nach dem abscheiden rasch verdunstet, gebildet werden, gelingt es, die darunter liegende Schicht oberflächlich etwas anzulösen, woraufhin die angelöste Schicht und die neu aufgebrachte Schicht zeitgleich und gemeinsam trocknen. Dadurch verschmelzen die Schlichten gleichsam und es wird eine chemisch und physikalisch besonders stabile Haftung zwischen den einzelnen Schichten erzielt, was die Möglichkeit einer Delamination zwischen den Schichten bei der Verwendung oder Sterilisation des Sensors praktisch ausschließt.

Um auch die Haftfähigkeit am Träger weiter zu verbessern, wird in einer bevorzugten Weiterbildung der Erfindung ein aufgebrachter Träger mit Unterschneidungen aufweisenden Oberflächenstrukturen eingesetzt. Durch eine derartige Vorgangsweise umschließen die abzuscheidenden Schichten nach der Beschichtung die Rauigkeitsstrukturen allseitig und vollständig, wodurch eine stabile mechanische Haftung am Träger erzielt ist, welche die Neigung zur Delamination auch bei oftmals wiederholter Sterilisation und nach einer Vielzahl an Messungen sicher unterdrückt.

Um sicherzustellen, dass ausschließlich die eine Stütz-, Schutz- und/oder Isolierschicht aufweisende Seite des Sensors mit dem Messmedium in Kontakt gelangt und um weiterhin eine Beschädigung des Sensors bei der Handhabung hintanzuhalten, ist der Sensor bevorzugt so weitergebildet, dass der Sensor in einer Montagekappe gehalten ist, welche bevorzugt mit Klemm- bzw. Halteelementen versehen ist, welche den Sensor in einer derartigen Weise halten, dass er einerseits nicht unbeabsichtigt aus der Montagekappe herausfallen kann und andererseits bei Bedarf jederzeit ausgetauscht werden kann. Hierbei wird insbesondere auch das Eindringen des Messmediums oder der Reinigungsmedien zwischen den Träger bzw. das Substrat und die Sensorschicht und damit die Ablösung des Sensors von dem Träger verhindert.

Für ein ordnungsgemäßes Funktionieren des opto-chemischen Sensors ist die Montagekappe weiterhin so ausgebildet, dass sie mit einem Festlegungselement für einen Lichtleiter versehen ist, welcher die Verbindung zwischen dem Sensor und der Messelektronik ausbildet.

Ein besonders langlebiger und häufig wieder verwertbarer Sensor kann gemäß der vorliegenden Erfindung dadurch erhalten werden, dass wenigstens die Polymermatrix der Sensorschicht aus löslichen, amorphen, perflourierten Polymeren, wie beispielsweise Polymerisaten aus substituierten Perflouro-2-methylen-1,3-dioxolanen oder Perfluoro-(4-vinyloxy-1-buten), insbesondere aber aus Poly[2,2,4-Trifluoro-5-trifluoromethoxy-1,3-dioxol-co-tetrafluorethylen] gebildet ist. Die Langlebigkeit eines derartigen Sensors kann weiter gesteigert werden, in dem als Basismaterial für die Deckschichten, welches mit TiO₂ oder Russ dotiert werden kann, lösliche, amorphe, perflourierte Polymere, wie beispielsweise Polymerisate aus substituierten Perfluoro-2-methylen-1,3-dioxolanen oder Perfluoro-(4-vinyloxy-1-buten), insbesondere aber Poly[2,2,4-Trifluoro-5-trifluoromethoxy-1,3-dioxol-co-tetrafluorethylen] gewählt wird. In einer weiters bevorzugten Weiterentwicklung wird als Basismaterial für die Deckschichten ein Polymer, welches identisch mit der Polymermatrix ist, gewählt.

Die Erfindung wird nachfolgend anhand von in der Zeichnung dargstellten Ausführungsbeispielen näher erläutert. In diesen zeigen:
Fig. 1 eine Draufsicht auf einen opto-chemischen Sensor gemäß der Erfindung,
Fig. 2 einen Schnitt durch einen opto-chemischen Sensor gemäß Fig. 1,
Fig. 3 eine andere Ausbildung eines Schnitts durch einen opto-chemischen Sensor gemäß der Erfindung,
Fig. 4 einen Schnitt durch eine Weiterbildung des opto-chemischen Sensors gemäß der Erfindung,
Fig. 5 einen Schnitt durch den opto-chemischen Sensor gemäß der Erfindung in einem Halteelement, und
Fig. 6 eine schematische Darstellung eines aufgerauten Trägers.

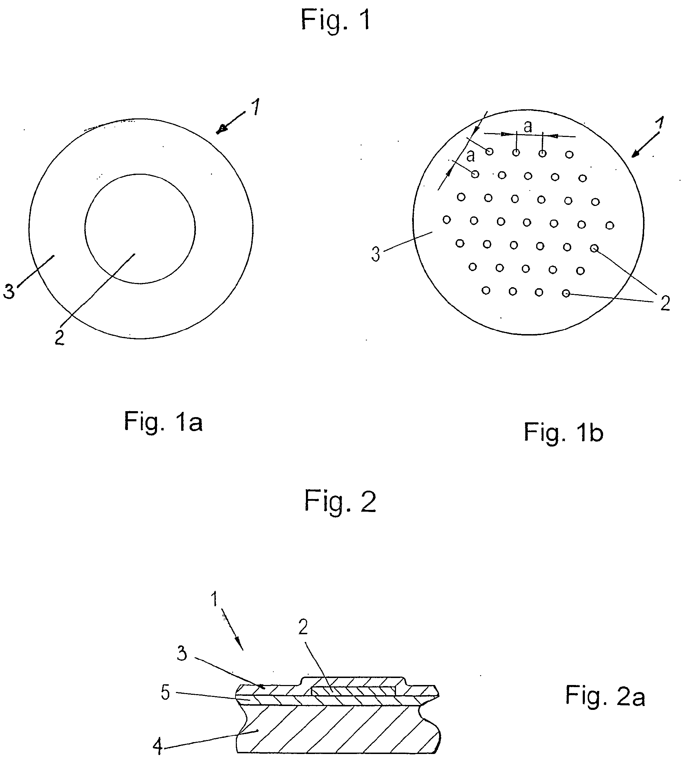

In Fig. 1 a mit 1 ein opto-chemischer Sensor bezeichnet, dessen Sensorschicht aus einem in eine Polymermatrix 3 eingebetteten Sensorelement 2 ausgebildet ist. Im Gegensatz dazu ist in Fig. 1b mit 1 ein opto-chemischer Sensor bezeichnet, dessen Sensorschicht aus einer Mehrzahl von Sensorelementen 2 ausgebildet ist. Das Sensorelement oder die Sensorelemente 2, welche in der Darstellung gemäß Fig. 1a und 1b als punktförmige oder flächige Sensorelemente 2 ausgebildet sind, welche bei Ausführung als Mehrzahl untereinander einen gleichmäßigen Abstand a aufweisen, sind hierbei in eine Polymermatrix 3 eingebettet, welche Polymermatrix 3 aus demselben Polymermaterial gebildet ist, wie die Sensorelemente 2, wobei jedoch die Sensorelemente 2 zusätzlich mit einem Lumineszenzfarbstoff dotiert sind.

Im Zusammenhang mit Fig. 1 a und 1 b erübrigt es sich festzuhalten, dass die Sensorelemente 2 des opto-chemischen Sensors 1 neben der gezeigten, kreisförmigen Form, wie beispielsweise elliptisch, eckig oder dgl. jede beliebige andere Form aufweisen können und sowohl der Abstand a zwischen den Sensorelementen 2 als auch die Anzahl derselben in dem opto-chemischen Sensor 1 beliebig variieren kann.

Schließlich können die Sensorelemente 2 auch mit unterschiedlichen bzw. voneinander verschiedenen Lumineszenzfarbestoffen dotiert sein oder aus verschiedenen Matrixmaterialien gebildet sein, um gleichzeitig entweder verschiedene Intensitäten des Messsignals zu ermöglichen oder eine Mehrzahl von gasförmigen oder gelösten Substanzen in einer Probe nachweisen zu können.

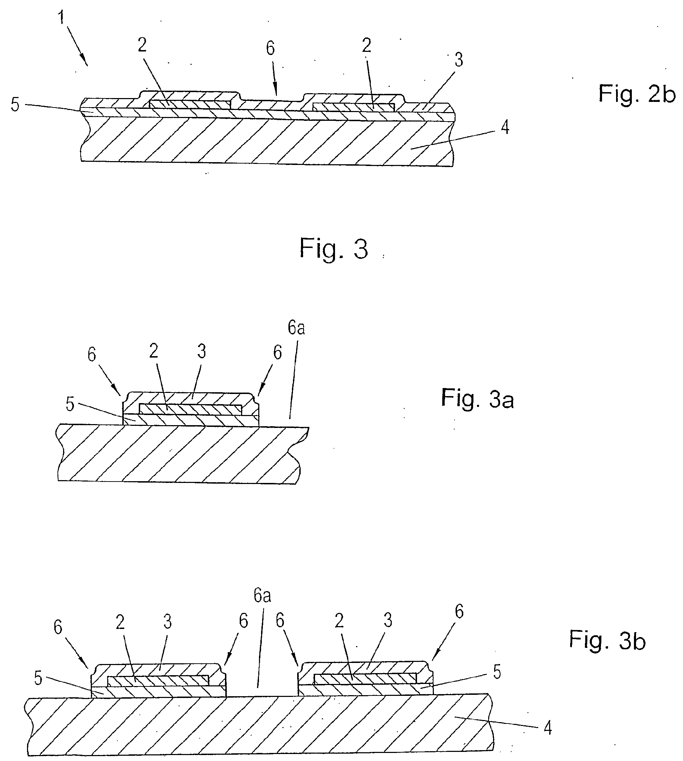

In Fig. 2, welche einen Schnitt durch den opto-chemischen Sensor 1 gemäß Fig. 1 darstellt, ist ersichtlich, dass die Polymermatrix 3 auf einem Träger 4 aufgebracht ist, welcher Träger 4 beispielsweise aus einem optisch inaktiven, lichtdurchlässigen Material, wie beispielsweise gegenüber Säuren, Basen und organischen Lösungsmittel unlösliche bzw. resistente Polymere, wie PET, Polycarbonat, Polymethacrylate oder Glas gebildet ist. Auf dem Träger 4 ist bei der Darstellung gemäß Fig. 2 eine Grundschicht 5 bestehend aus dem Material wie die Schicht 3 aufgebracht, welches Polymermaterial nicht mit einem Lumineszenzfarbstoff dotiert ist. Die Grundschicht 5 ist hierbei entweder als durchgehende Schicht auf dem Träger 4 ausgebildet oder aber bei Vorliegen einer Mehrzahl von Sensorelementen in Form von inselförmig auf dem Träger 4 verteilten Schichtelementen, welche in ihrer Größe die Sensorelemente 2 allseitig geringfügig überragen, wie dies in Fig. 3 dargestellt ist. Auf der Schicht bzw. Grundschicht 5 sind die Sensorelemente 2 bei ihrer Ausführung als Mehrzahl gleichmäßig voneinander beabstandet aufgebracht und die Sensorelemente 2 sind wiederum mit der Polymermatrix 3, in welche kein Lumineszenzfarbstoff integriert ist, überdeckt. Die Schicht 3 ist hierbei so ausgebildet, dass sie jeweils zwischen den Sensorelementen 2 in direktem Kontakt mit der Grundschicht 5 ist und mit dieser Grundschicht 5 chemisch und/oder physikalisch im Bereich 6 um das Sensorelement bzw. zwischen den Sensorelementen 2 verbunden ist. Durch eine derartige Ausbildung gelingt es einerseits, die Sensorelemente 2 vollständig abzudecken und somit ein Ausbluten der Sensorelemente 2, insbesondere des in den Sensorelementen 2 enthaltenen Lumineszenzfarbstoffs mit Sicherheit hintanzuhalten und andererseits jedes Sensorelement 2 zu einer von den anderen Sensorelementen 2 unabhängigen Messeinrichtungen zu machen. Weiterhin gelingt es durch die Anordnung der Polymermatrix auf dem Sensor, den Sensor selbst vor chemischen Angriffen zu schützen, da insbesondere in einem häufigen Einsatzbereich von opto-chemischen Sensoren, nämlich der Überwachung von Lebensmittelprozessen es sinnvoll bzw. wichtig ist, die Polymermatrix vorgängigen Desinfektionsmedien, wie beispielsweise Peroxyessigsäure, Phosphorsäure, Salpetersäure, Salzsäure, Natronlauge oder Hypochlorit zu schützen. Weiterhin wird durch das Anordnen der Polymermatrix beispielsweise eine Oxidation des Sensorfarbstoffs mit Sicherheit hintangehalten.

Die Ausbildung gemäß Fig. 2 kann jedoch auch so ausgebildet sein, dass die Sensorelemente 2 in direktem Kontakt mit dem Träger 4 sind, in welchem Fall die Polymermatrix bzw. Schicht 3 zwischen den Sensorelementen 2 in direktem Kontakt mit dem Träger 4 ist mit diesem physikalisch und/oder chemisch verbunden ist, um wiederum ein unbeabsichtigtes Austreten bzw. Auswaschen von Lumineszenzfarbestoff aus den Sensorelementen 2 hintanzuhalten.

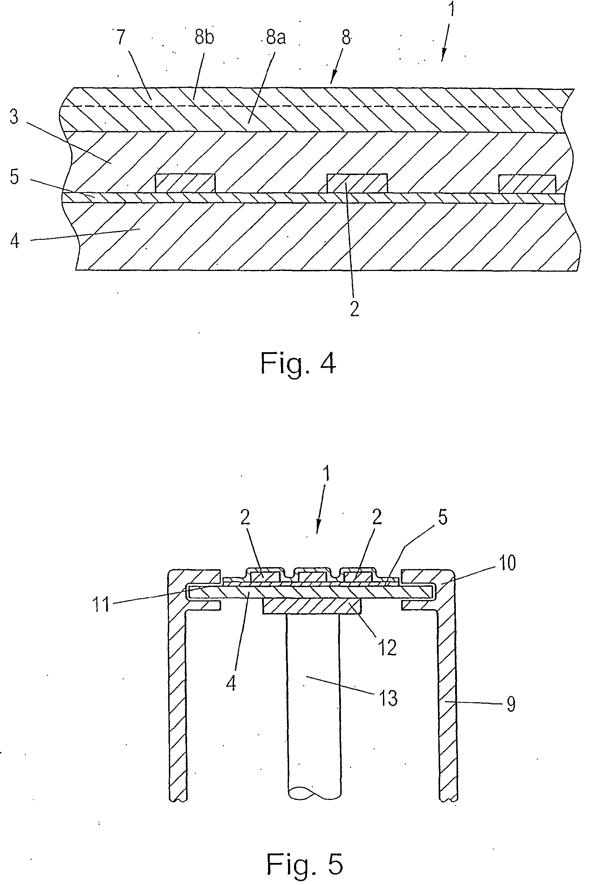

Bei der Darstellung gemäß Fig. 4, in welcher die Bezugszeichen der vorhergehenden Figuren so weit als möglich beibehalten sind, ist auf dem Träger 4 wiederum eine Grundschicht 5 aufgebracht sowie die Sensorelemente 2 in der Polymermatrix 3 eingebettet. Um dem Sensor 1 gemäß Fig. 3 einerseits eine größere Festigkeit zu verleihen und andererseits ein unbeabsichtigtes Beschädigen sowohl der Polymermatrix 3 als auch der Sensorelemente 2 mit Sicherheit hintanzuhalten, ist auf der Polymermatrix 3 eine schematisch dargestellte Stütz-, Schutz- und/oder Isolierschicht 7, beispielsweise aus grob- oder feinporigem Polytetrafluorethylen aufgebracht. Schließlich ist über und unter der Isolierbzw. Stützschicht 7 eine Deckschicht 8 aufgebracht. Die Deckschicht 8 ist hierbei entweder aus einem mit Russ pigmentiertem Polymer gebildet, um eine unbeabsichtigte Anregung des Sensors mit Fremdlicht hintanzuhalten.

Bei einer Konstruktion des Sensors 1 gemäß Fig. 4 bleiben in regelmäßigen Abständen Bereiche 6a des Trägers 4 frei und es liegt eine direkte physikalische oder chemische Verbindung der Deckschicht 8 mit Träger 4 in diesen Bereichen 6a vor. Durch eine direkte Verbindung wird die mechanische Stabilität des Sensors bzw. dessen Schichtaufbaus deutlich erhöht und insbesondere die Neigung des Sensors zur Delamination verringert.

Für einen besonders guten Halt der Stütz-, Schutz- und/oder Isolierschicht 7 auf dem Sensor ist die Deckschicht 8 gemäß einer Variante der Erfindung so ausgebildet, dass sie zweiteilig ist, wobei derjenige Teil der Deckschicht 8, der zu dem Sensor gerichtet ist, die Deckschicht Ba mit TiO₂ pigmentiert ausgebildet ist, auf der Deckschicht Ba die Schutz- bzw. Isolierschicht angeordnet ist und über der Stütz-, Schutz- und/oder Isolierschicht der zweite Teil der Deckschicht, nämlich die Deckschicht 8b angeordnet ist, welche aus demselben Grundmaterial wie die Deckschicht 8a besteht, jedoch stattdessen mit Russ pigmentiert ist. Durch eine derartige Ausbildung wird einerseits durch das TiO₂ eine exzellente Rückstreuung des Anregungs- und Lumineszenzlichts erreicht, wodurch beispielsweise die Menge des eingesetzten Fluoreszenzfarbstoffs reduziert werden kann und andererseits durch den Russ eine gute optische Isolierung. Indem beispielsweise die Schicht 7 in die Schicht 8 eingebettet wird, wird ein mechanisch integrer und stabiler Materialverbund erreicht.

Um eine besonders effiziente Messung mit dem opto-chemischen Sensor 1 gemäß der Erfindung durchführen zu können, ist weiterhin die Grundschicht 5 und/oder die Polymermatrix 3 so ausgebildet, dass sie beispielsweise mit TiO₂ pigmentiert ist bzw. sind, um eine möglichst gute Lichtstreuung zu erreichen. Schließlich können die Sensorelemente 2, welche in die Polymermatrix eingebettet sind bzw. auf der Grundschicht 5 angeordnet sind, untereinander dahingehend verschieden sein, dass sie mit beispielsweise zwei verschiedenen Lumineszenzfarbstoffen dotiert sind, um verschiedene nachzuweisende Substanzen gleichzeitig messen zu können.

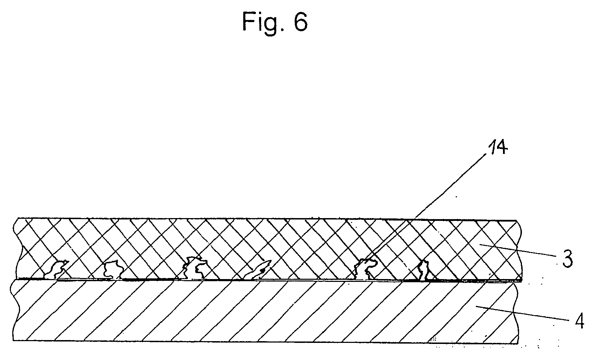

Um eine besonders gute Haftfähigkeit des wenigstens einen Sensorelements 2 oder der nicht dotierten Polymermatrix 3 auf dem Träger 4 zu erzielen, wird der Träger 4 vor dem Beschichten derart angeraut, so dass Rauigkeitsstrukturen, welche Unterschneidungen 14 aufweisen, erhalten werden, wie dies in Fig. 6 dargestellt ist. Nach dem Abscheiden der Sensorsschicht 2 oder der nicht dotierten Polymermatrix 3 werden die Rauigkeitsstrukturen allseitig umschlossen, so dass neben der chemischen Haftung auch eine stabile mechanische Verankerung erreicht wird.

Für einen praktischen Einsatz des Sensors 1 gemäß der Erfindung wird der Sensor 1 in einer Montagekappe 9 gehalten, wie dies in Fig. 5 dargestellt ist. Die Montagekappe 9 weist hierbei einerseits eine Klemmvorrichtung 10 für das Halten des Sensors 1 auf, wobei der Sensor 1 in die Montageklammer 10 mit seinen Endbereichen 11 eingeklemmt ist, welche Endbereiche frei von mit Lumineszenzfarbstoff dotierten Sensorelementen 2 sind. Durch ein festes Halten des Sensors 1 mittels der Klemmvorrichtungen 10 wird überdies ein unbeabsichtigtes Ablösen der auf dem Träger 4 aufgebrachten Schichten, wie beispielsweise der Grundschicht 5, der Schutzschicht 7 sowie der Deckschicht 8 mit Sicherheit vermieden.

An der Rückseite des opto-chemischen Sensors 1 ist weiterhin ein schematisch dargestelltes Festlegungselement 12 ersichtlich, in welches Festlegungselement 12 ein Lichtleiter 13 eingesetzt ist, zur Verbindung des opto-chemischen Sensors 1 mit einer nicht dargestellten Opto-Elektronik bzw. Messelektronik. Der Lichtleiter 13 kann hierbei beispielsweise aus einer Glasfaser, einem Glasfaserbündel oder einem als Lichtleiter ausgeführten Glasstab oder anderen zur Lichtleitung geeigneten Einrichtungen gebildet sein.

Zusammenfassend ist festzuhalten, dass aufgrund der inselartigen Anordnung des Sensorelementes oder der Sensorelemente 2 in der Polymermatrix 3 bzw. in der Schicht 3 einerseits ein Ausbluten der Sensorelemente 2 und somit eine Verschlechterung des Sensors 1 auch bei einer Mehrzahl von Einsätzen mit Sicherheit hintangehalten werden kann. Gleichzeitig gelingt es durch eine derartige Anordnung, einen kostengünstigen und effizient messenden Sensor 1 zur Verfügung zu stellen, mit welchem auch untereinander verschiedene gasförmige oder gelöste, nachzuweisende Substanzen gemessen werden können.

## Patentansprüche

1. Opto-chemischer Sensor (1), umfassend eine auf einem Träger (4) aufgebrachte Polymermatrix, welche mit einem Lumineszenzfarbstoff dotiert ist, dessen Emissionsvermögen nach einer Anregung mit elektromagnetischer Strahlung durch nachzuweisende Substanzen, wie gasförmiges oder gelöstes O₂, SO₂, H₂O₂, CO₂, Stickoxide, halogenierte Kohlenwasserstoffe veränderbar ist und welche eine Sensorschicht ausbildet, welche weiterhin mit einer für die zu analysierende Substanz durchlässigen, Schutz-, Stütz- und/oder Isolierschicht (7) abgedeckt ist, **dadurch gekennzeichnet, dass** die Sensorschicht aus einer wenigstens ein inselförmiges Sensorelement (2) aufweisenden Schicht gebildet ist, welches wenigstens eine Sensorelement (2) von einer, nicht dotierten Polymermatrix (3) aus demselben Polymermaterial wie das wenigstens eine Sensorelement (2) überdeckt ist und dass eine weitere Schicht (5) aus demselben Material wie die nicht dotierte Polymermatrix (3) zwischen dem Träger (4) und der das wenigstens eine Sensorelement aufweisenden Schicht vorgesehen ist.

2. Opto-chemischer Sensor (1) nach Anspruch 1, **dadurch gekennzeichnet, dass** die Sensorschicht aus einer eine Mehrzahl von voneinander getrennten Sensorelementen (2) aufweisenden Schicht gebildet ist, welche Sensorelemente (2) von einer chemisch der Polymermatrix der Sensorschicht entsprechenden, nicht dotierten Polymermatrix (3) überdeckt sind.

3. Opto-chemischer Sensor (1) nach Anspruch 1 oder 2, **dadurch gekennzeichnet, dass** die zwei Schichten (3, 5) aus nicht dotierter Polymermatrix in dem das wenigstens eine Sensorelement umgebenden Bereich miteinander chemisch und/oder physikalisch verbunden sind.

4. Opto-chemischer Sensor (1) nach Anspruch 1, 2 oder 3, **dadurch gekennzeichnet, dass** die Mehrzahl von Sensorelementen (2) als Feld von untereinander einen gleichmäßigen Abstand (a) aufweisenden Sensorelementen (2), insbesondere punktförmigen Sensorelementen ausgebildet ist.

5. Opto-chemischer Sensor (1) nach Anspruch 4, **dadurch gekennzeichnet, dass** das Feld von Sensorelementen (2) aus wenigstens zwei voneinander in Bezug auf die Art der Dotierung mit Lumineszenzfarbstoff oder die Art des Matrixpolymers verschiedenen Gruppen von Sensorelementen (2) gebildet ist.

6. Opto-chemischer Sensor (1) nach einem der Ansprüche 1 bis 5, **dadurch gekennzeichnet, dass** die Stütz-, Schutz- und/oder Isolierschicht (7) aus grob- oder feinporigen Poly- tetrafluorethylenmembranen oder Nylonmembranen, insbesondere mit einer Porengröße zwischen 0,1 µm und 160 µm, vorzugsweise 0,1 µm und 30 µm, Kohlefasergeweben, speziellen Textilfasergeweben, semipermeablen Membranen aus löslichen Polymeren, insbesondere löslichen, perfluorierten Polymeren, oder einer Kombination daraus gewählt ist.

7. Opto-chemischer Sensor (1) nach einem der Ansprüche 1 bis 6, **dadurch gekennzeichnet, dass** die optische Stütz-, Schutz- und/oder Isolierschicht (7) wenigstens teilweise in die die Sensoren (1) aufweisende Schicht abdeckende, nicht dotierte Polymermatrix (3) eingebettet ist.

8. Opto-chemischer Sensor (1) nach einem der Ansprüche 1 bis 7 **dadurch gekennzeichnet, dass** über der nicht dotierten Polymermatrix (3) oder der Stütz-, Schutz- oder Isolierschicht (7) eine Deckschicht (8) vorgesehen ist.

9. Opto-chemischer Sensor (1) nach Anspruch 8, **dadurch gekennzeichnet, dass** die Deckschicht 8 aus zwei Deckschichten (8a, 8b) ausgebildet ist und dass zwischen den Deckschichten (8a, 8b) die Stütz-, Schutz- und/oder Isolierschicht (7) angeordnet ist.

10. Opto-chemischer Sensor (1) nach Anspruch 9, **dadurch gekennzeichnet, dass** die Deckschicht (8b) mit Russ pigmentiert ist und dass die innere Deckschicht (8a) mit TiO₂ pigmentiert ist.

11. Opto-chemischer Sensor (1) nach einem der Ansprüche 1 bis 10, **dadurch gekennzeichnet, dass** die Deckschicht (8) aus Silikonen, teilweise fluorierten Silikonen und Perfluorsilikonen, Beschichtungen aus löslichen Polymeren, insbesondere löslichen, perfluorierten Polymeren, oder einer Kombination daraus gewählt ist.

12. Opto-chemischer Sensor (1) nach einem der Ansprüche 1 bis 11, **dadurch gekennzeichnet, dass** die Deckschicht (8) aus demselben Grundmaterial wie die Polymermatrix des Sensors (1) gebildet ist.

13. Opto-chemischer Sensor (1) nach einem der Ansprüche 1 bis 12, **dadurch gekennzeichnet, dass** ein aufgebrachter Träger (4) mit Unterschneidungen (14) aufweisenden Oberflächenstrukturen (11) eingesetzt ist.

14. Opto-chemischer Sensor (1) nach einem der Ansprüche 1 bis 13, **dadurch gekennzeichnet, dass** der opto-chemische Sensor (1) in einer Montagekappe (9) gehalten ist.

15. Opto-chemischer Sensor (1) nach Anspruch 14, **dadurch gekennzeichnet, dass** die Montagekappe (9) mit einem Klemm- bzw. Halteelement (10) versehen ist.

16. Opto-chemischer Sensor (1) nach Anspruch 14 oder 15, **dadurch gekennzeichnet, dass** die Montagekappe (9) ein Festlegungselement (12) für einen Lichtleiter (13) aufweist.

17. Opto-chemischer Sensor (1) nach einem der Ansprüche 1 bis 16, **dadurch gekennzeichnet, dass** wenigstens die Polymermatrix der Sensorschicht aus löslichen, amorphen, perflourierten Polymeren, wie beispielsweise Polymerisaten aus substituierten Perfluoro-2-methylen-1,3-dioxolanen oder Perfluoro-(4-vinyloxy-1buten), insbesondere Poly[2,2,4-Trifluoro-5-trifluoromethoxy-1,3-dioxol-co-tetrafluorethylen] gebildet ist.

18. Opto-chemischer Sensor (1) nach einem der Ansprüche 1 bis 17, **dadurch gekennzeichnet, dass** die Deckschicht und die Sensorschicht aus löslichen, amorphen, perflourierten Polymeren, wie beispielsweise Polymerisaten aus substituierten Perfluoro-2-methylen-1,3-dioxolanen oder Perfluoro-(4-vinyloxy-1-buten), insbesondere Poly[2,2,4-Trifluoro-5-trifluoromethoxy-1,3-dioxol-co-tetrafluorethylen] gebildet sind.

## Claims

1. Optochemical sensor (1) including a polymer matrix (3) applied on a substrate (4) and doped with a luminescent dye whose capability of emission can be varied upon excitation with electromagnetic radiation by substances to be detected, such as gaseous or dissolved O₂, SO₂, H₂O₂, CO₂, nitrogen oxides, halogenated hydrocarbons, and which forms a sensor layer, which is further covered by a protecting, supporting and/or insulating layer (7) permeable for the substance to be analyzed, **characterized in that** the sensor layer is formed by a layer comprising at least one insular sensor element (2), which at least one insular sensor element (2) is covered by an undoped polymer matrix (3) chemically corresponding to the polymer matrix of the sensor layer, and that a further layer (5) corresponding to the undoped polymer matrix (3) is provided between the substrate (4) and the layer comprising the at least one sensor element.

2. Optochemical sensor (1) according to claim 1, **characterized in that** the sensor layer is formed by a layer comprising a plurality of mutually separate sensor elements (2), which sensor elements (2) are covered by an undoped polymer matrix (3) chemically corresponding to the polymer matrix of the sensor layer.

3. Optochemical sensor (1) according to claim 1 or 2, **characterized in that** in the two layers (3, 5) of undoped polymer matrix are chemically and/or physically interconnected in the region encompassing the at least one sensor element.

4. Optochemical sensor (1) according to claim 1, 2, or 3, **characterized in that** the plurality of sensor elements (2) is formed as a field of sensor elements (2), in particular punctiform sensor elements, comprising mutually equal distances (a).

5. Optochemical sensor (1) according to claim 4, **characterized in that** the field of sensor elements (2) is comprised of at least two groups of sensor elements (2) which differ from each other in terms of the type of the doping with luminescent dye or the type of the matrix polymer.

6. Optochemical sensor (1) according to any of claims 1 to 5, **characterized in that** the supporting, protecting and/or insulating layer (7) is selected from porous polytetrafluoroethylene membranes or nylon membranes the pores of which are coarse or fine, in particular having a pore size ranging between 0.1 µm and 160 µm, preferably between 0.1 µm and 30 µm, carbon fiber fabrics, special textile fiber fabrics, semipermeable membranes of soluble polymers, in particular soluble, perfluorinated polymers, or a combination thereof.

7. Optochemical sensor (1) according to any of claims 1 to 6, **characterized in that** the optical supporting, protecting and/or insulating layer (7) is at least partially embedded in the undoped polymer matrix (3) covering the layer comprising the sensors (1).

8. Optochemical sensor (1) according to any of claims 1 to 7, **characterized in that** a cover layer (8) is provided above the undoped polymer matrix (3) or the supporting, protecting and/or insulating layer (7).

9. Optochemical sensor (1) according to claim 8, **characterized in that** the cover layer (8) is comprised of two cover layers (8a, 8b), and that the supporting, protecting and/or insulating layer (7) is disposed between the cover layers (8a, 8b).

10. Optochemical sensor (1) according to claim 9, **characterized in that** the cover layer (8b) is pigmented with carbon black, and that the inner cover layer (8a) is pigmented with TiO₂.

11. Optochemical sensor (1) according to any of claims 1 to 10, **characterized in that** the cover layer (8) is selected from silicones, partially fluorinated silicones and perfluorosilicones, coatings of soluble polymers, in particular soluble, perfluorinated polymers, or a combination thereof.

12. Optochemical sensor (1) according to any of claims 1 to 11, **characterized in that** the cover layer (8) is comprised of the same base material as the polymer matrix of the sensor (1).

13. Optochemical sensor (1) according to any of claims 1 to 12, **characterized in that** an applied substrate (4) having surface structures (11) with undercuts (14) is employed.

14. Optochemical sensor (1) according to any of claims 1 to 13, **characterized in that** the optochemical sensor (1) is held in a mounting cap (9).

15. Optochemical sensor (1) according to claim 14, **characterized in that** the mounting cap (9) is provided with a clamping or retaining element (10).

16. Optochemical sensor (1) according to claim 11 or 14, **characterized in that** the mounting cap (9) comprises a fixing element (12) for an optical waveguide (13).

17. Optochemical sensor (1) according to any of claims 1 to 16, **characterized in that** at least the polymer matrix of the sensor layer is comprised of soluble, amorphous, perfluorinated polymers such as polymers of substituted perfluoro-2-methylene-1,3-dioxolanes or perfluoro-(4-vinyloxy-1-butene), in particular poly[2,2,4-trifluoro-5-trifluoromethoxy-1,3dioxol-co-tetrafluoroethylene].

18. Optochemical sensor (1) according to any of claims 1 to 17, **characterized in that** the cover layer and the sensor layer are comprised of soluble, amorphous, perfluorinated polymers such as polymers of substituted perfluoro-2-methylene-1,3-dioxolanes or perfluoro-(4-vinyloxy-1-butene), in particular poly[2,2,4-trifluoro-5-trifluoromethoxy-1,3-dioxol-co-tetrafluoroethylene].

## Revendications

1. Capteur opto-chimique (1), comprenant une matrice polymère appliquée sur un support (4), qui est dopée à l'aide d'un colorant luminescent dont le pouvoir émissif, après une excitation par un rayonnement électromagnétique, est variable selon les substances à détecter, telles que O₂, SO₂, H₂O₂, CO₂, des oxydes d'azote, des hydrocarbures halogénés, gazeux ou dissous, et qui forme une couche capteur, laquelle est en outre couverte par une couche de protection, de support et/ou d'isolation (7), perméable à la substance à analyser, **caractérisé en ce que** la couche capteur est formée par une couche comportant au moins un élément capteur en forme d'îlot (2), ledit au moins un élément capteur (2) étant recouvert par une matrice polymère non dopée (3) constituée du même matériau polymère que ledit au moins un élément capteur (2) et **en ce qu'**il est prévu une autre couche (5), constituée du même matériau que la matrice polymère non dopée (3), entre le support (4) et la couche présentant ledit au moins un élément capteur.

2. Capteur opto-chimique (1) selon la revendication 1, **caractérisé en ce que** la couche capteur est formée par une couche présentant une pluralité d'éléments capteurs (2) séparés les uns des autres, ces éléments capteurs (2) étant recouverts par une matrice polymère non dopée (3), correspondant chimiquement à la matrice polymère de la couche capteur.

3. Capteur opto-chimique (1) selon la revendication 1 ou 2, **caractérisé en ce que** les deux couches (3, 5) en matrice polymère non dopée sont assemblées chimiquement et/ou physiquement l'une à l'autre dans la région entourant ledit au moins un élément capteur.

4. Capteur opto-chimique (1) selon la revendication 1, 2 ou 3, **caractérisé en ce que** la pluralité d'éléments capteurs (2) sont agencés sous la forme d'un champ d'éléments capteurs (2) présentant une distance régulière uniforme (a) de l'un à l'autre, en particulier d'éléments capteurs ponctuels.

5. Capteur opto-chimique (1) selon la revendication 4, **caractérisé en ce que** le champ d'éléments capteurs (2) est formé par au moins deux groupes d'éléments capteurs (2) qui diffèrent l'un de l'autre en ce qui concerne la nature du dopage avec un colorant luminescent ou la nature de la matrice polymère.

6. Capteur opto-chimique (1) selon l'une quelconque des revendications 1 à 5, **caractérisé en ce que** la couche de support, de protection et/ou d'isolation (7) est choisie parmi des membranes à grands pores ou à fins pores en polytétrafluoroéthylène ou en nylon, en particulier avec une taille de pores comprise entre 0,1 µm et 160 µm, de préférence 0,1 µm et 30 µm, des tissus en fibres de carbone, des tissus spéciaux en fibres textiles, des membranes semi-perméables en polymères solubles, en particulier des polymères perfluorés solubles, ou une combinaison de ceux-ci.

7. Capteur opto-chimique (1) selon l'une quelconque des revendications 1 à 6, **caractérisé en ce que** la couche de support, de protection et/ou d'isolation (7) est noyée au moins partiellement dans la matrice polymère non dopée (3) recouvrant la couche présentant les capteurs (1).

8. Capteur opto-chimique (1) selon l'une quelconque des revendications 1 à 7, **caractérisé en ce qu'**il est prévu une couche de recouvrement (8) au-dessus de la matrice polymère non dopée (3) ou de la couche de support, de protection et/ou d'isolation (7).

9. Capteur opto-chimique (1) selon la revendication 8, **caractérisé en ce que** la couche de recouvrement (8) est formée de deux couches de recouvrement (8a, 8b) et **en ce que** la couche de support, de protection et/ou d'isolation (7) est disposée entre les deux couches de recouvrement (8a, 8b).

10. Capteur opto-chimique (1) selon la revendication 9, **caractérisé en ce que** la couche de recouvrement (8b) est pigmentée avec de la suie et **en ce que** la couche de recouvrement intérieure (8a) est pigmentée avec du TiO₂.

11. Capteur opto-chimique (1) selon l'une quelconque des revendications 1 à 10, **caractérisé en ce que** la couche de recouvrement (8) est choisie parmi des silicones, des silicones partiellement fluorés et des perfluorosilicones, des revêtements en polymères solubles, en particulier des polymères perfluorés solubles, ou une combinaison de ceux-ci.

12. Capteur opto-chimique (1) selon l'une quelconque des revendications 1 à 11, **caractérisé en ce que** la couche de recouvrement (8) est formée du même matériau de base que la matrice polymère du capteur (1).

13. Capteur opto-chimique (1) selon l'une quelconque des revendications 1 à 12, **caractérisé en ce qu'**un support appliqué (4) est utilisé avec des structures de surface (11) présentant des encoches (14).

14. Capteur opto-chimique (1) selon l'une quelconque des revendications 1 à 13, **caractérisé en ce que** le capteur opto-chimique (1) est maintenu dans une coiffe de montage (9)

15. Capteur opto-chimique (1) selon la revendication 14, **caractérisé en ce que** la coiffe de montage (9) est munie d'un élément de serrage ou de retenue (10).

16. Capteur opto-chimique (1) selon la revendication 14 ou 15, **caractérisé en ce que** la coiffe de montage (9) présente un élément de fixation (12) pour un guide d'onde lumineuse (13).

17. Capteur opto-chimique (1) selon l'une quelconque des revendications 1 à 16, **caractérisé en ce qu'**au moins la matrice polymère de la couche capteur est formée de polymères perfluorés amorphes solubles, comme par exemple des polymérisats de perfluoro-2-méthylène-1,3dioxolanes substitués ou de perfluoro-(4-vinyloxy-1butène), en particulier de poly[2,2,4-trifluoro-5trifluorométhoxy-1,3-dioxol-co-tétrafluoroéthylène].

18. Capteur opto-chimique (1) selon l'une quelconque des revendications 1 à 17, **caractérisé en ce que** la couche de recouvrement et la couche capteur sont formées de polymères perfluorés amorphes solubles, comme par exemple des polymérisats de perfluoro-2-méthylène-1,3dioxolanes substitués ou de perfluoro-(4-vinyloxy-1-butène), en particulier de poly[2,2,4-trifluoro-5trifluorométhoxy-1,3-dioxol-co-tétrafluoroéthylène].
